# EUROPÄISCHE PATENTSCHRIFT

(11) **EP 4 229 486 B1**
(45) Veröffentlichungstag und Bekanntmachung des Hinweises auf die Patenterteilung: **27.08.2025**
(21) Anmeldenummer: 21783399.5
(22) Anmeldetag: 29.09.2021
(51) Int. Cl.: G05B 13/02

(54) **VERFAHREN ZUM BETREIBEN EINER VERFAHRENSTECHNISCHEN ANLAGE, VERFAHRENSTECHNISCHE ANLAGE UND VERFAHREN ZUM UMRÜSTEN EINER VERFAHRENSTECHNISCHEN ANLAGE**
PROCESS ENGINEERING SYSTEM, METHOD FOR OPERATING A PROCESS ENGINEERING SYSTEM AND METHOD FOR RETROFITTING A PROCESS ENGINEERING SYSTEM
PROCÉDÉ DE FONCTIONNEMENT D'UNE INSTALLATION TECHNIQUE, INSTALLATION TECHNIQUE ET PROCÉDÉ DE TRANSFORMATION D'UNE INSTALLATION TECHNIQUE

(30) Priorität: 14.10.2020 EP 20020474
(43) Veröffentlichungstag der Anmeldung: 23.08.2023
(73) Patentinhaber: Linde GmbH, 82049 Pullach (DE)
(72) Erfinder: ZAPP, Gerhard, 82049 Pullach (DE); LENZ, Stefan, 82049 Pullach (DE); BLUM, Nicolas, 82049 Pullach (DE)
(74) Vertreter: Imhof, Dietmar
(86) Internationale Anmeldenummer: PCT/EP2021/025371
(87) Internationale Veröffentlichungsnummer: WO 2022/078623

(56) Entgegenhaltungen:
- CN-A- 109 143 870
- US-A1- 2018 218 262
- US-A1- 2019 091 859
- US-A1- 2019 187 631

## Beschreibung

Die Erfindung betrifft ein Verfahren zum Betreiben einer verfahrenstechnischen Anlage, insbesondere einer Luftzerlegungsanlage, eine verfahrenstechnische Anlage und ein Verfahren zum Umrüsten einer verfahrenstechnischen Anlage gemäß den jeweiligen Oberbegriffen der unabhängigen Patentansprüche.

### Hintergrund der Erfindung

Die vorliegende Erfindung wird nachfolgend überwiegend unter Bezugnahme auf Verfahren und Anlagen zur Tieftemperaturzerlegung von Luft beschrieben, weshalb hier zunächst kurz auf solche Verfahren und Anlagen eingegangen werden soll. Wie auch nachfolgend erläutert, kann die vorliegende Erfindung jedoch auch bei anderen verfahrenstechnischen Anlagen und zwar insbesondere, aber nicht ausschließlich, bei Anlagen, in denen eine Tieftemperaturtrennung von Komponentengemischen erfolgt, wie Anlagen zur Bearbeitung von Erdgas oder von Produktgemischen aus Synthesen oder Umsetzungsverfahren wie Reformierung, Cracken usw. zum Einsatz kommen. Allgemein werden solche Anlagen auch als Gasanlagen bezeichnet.

Die Herstellung von Luftprodukten in flüssigem oder gasförmigem Zustand durch Tieftemperaturzerlegung von Luft in Luftzerlegungsanlagen ist bekannt und beispielsweise bei H.-W. Häring (Hrsg.), Industrial Gases Processing, Wiley-VCH, 2006, insbesondere Abschnitt 2.2.5, "Cryogenic Rectification", beschrieben. Ist nachfolgend von einer Luftzerlegungsanlage die Rede, sei hierunter eine Tieftemperatur-Luftzerlegungsanlage verstanden.

Luftzerlegungsanlagen klassischer Art weisen Rektifikationskolonnensysteme auf, die beispielsweise als Zweikolonnensysteme, insbesondere als Doppelkolonnensysteme, aber auch als Drei- oder Mehrkolonnensysteme ausgebildet sein können. Neben Rektifikationskolonnen zur Gewinnung von Stickstoff und/oder Sauerstoff in flüssigem und/oder gasförmigem Zustand, also Rektifikationskolonnen zur Stickstoff-Sauerstoff-Trennung, können Rektifikationskolonnen zur Gewinnung weiterer Luftkomponenten, insbesondere von Edelgasen, vorgesehen sein.

Die Rektifikationskolonnen der genannten Rektifikationskolonnensysteme werden auf unterschiedlichen Druckniveaus betrieben. Bekannte Doppelkolonnensysteme weisen eine sogenannte Hochdruckkolonne (Druckkolonne, Mitteldruckkolonne, untere Kolonne) und eine sogenannte Niederdruckkolonne (obere Kolonne) auf. In diesen Kolonnen wird die Trennung insbesondere durch ein mittels Regeleinrichtungen vorgegebenes Einspeisen von flüssigen Rücklaufströmen aufrechterhalten.

Luftzerlegungsanlagen stellen sowohl vom Anlagentyp als auch von den Anforderungen bezüglich Lastwechselfähigkeiten und Ausbeuteoptimierungen hohe Anforderungen an die übergeordnete Prozessführung. Sie sind gekennzeichnet durch eine intensive Verkopplung der Rektifikationskolonnen und anderer Apparate durch Wärme- und Stoffbilanzen und stellen aus regelungstechnischer Sicht ein hoch verkoppeltes Mehrgrößensystem dar. Zudem sind die Sollwerte der zu regelnden Größen (Analysen, Temperaturen, etc.) abhängig vom Lastfall. Andererseits müssen beispielsweise Luftzerlegungsanlagen für die Erzeugung gasförmiger Produkte schnell mit der Produktion dem Bedarf nachfolgen und zugleich eine möglichst hohe Produktausbeute (insbesondere an Sauerstoff und/oder Argon) gewährleisten. Hierbei kann ein sogenannter Basisregler einen Prozessparameter auf einen Sollwert einregeln. Ein solcher Prozessparameter wird durch einen physikalische Größe gebildet, die Einfluss auf den Prozess der Luftzerlegung hat, beispielsweise durch den Druck, die Temperatur oder den Durchfluss an einer bestimmten Stelle der Luftzerlegungsanlage bzw. bei einem bestimmten Verfahrensschritt.

Der Basisregler kann in eher herkömmlichen Luftzerlegungsanlagen insbesondere als P-Regler (engl. Proportional Controller), Pl-Regler (engl. Proportional Integrative Controller), PD-Regler (engl. Proportional Derivative Controller) oder PID-Regler (engl. Proportional Integrative Derivative Controller) ausgebildet sein. Alternativ können zwei oder mehr Regler als Kaskadenregler miteinander verschaltet und als Basisregler eingesetzt werden. Die Gesamtheit der Basisregler wird zusammen mit den notwendigen Verriegelungen und Logiken auf einem sogenannten Leitsystem realisiert.

Eine sogenannte ALC-Steuerung (engl. Automatic Load Change) arbeitet eine Ebene höher und gibt Sollwerte für einen oder mehrere Basisregler vor, vorzugsweise für das komplette System, d.h. für alle Basisregler. Damit kann automatisch zwischen den verschiedenen Lastfällen einer Luftzerlegungsanlage gewechselt werden. Diese Technik beruht typischerweise auf einer Interpolation zwischen mehreren im Probebetrieb eingestellten und erfassten Lastfällen. Um einen neuen Lastfall anzufahren, werden die Zielsollwerte der Basisregler des Leitsystems vorgerechnet und dann mit einer synchronisierten Rampe angefahren, d.h. innerhalb eines vorgegebenen Zeitraums in kleinen zeitlichen Schritten verstellt.

Die ALC-Steuerung gibt also den Basisreglern einen erprobten Weg zu dem zu erreichenden Lastfall vor. Dadurch ergibt sich eine sehr hohe Verstellgeschwindigkeit. Eine Regelung erfolgt allenfalls in der Basisregelung, beispielsweise durch Kaskadenregler. Speziell werden sogenannte Trimmregler am Leitsystem eingesetzt, wobei ein von der ALC-Steuerung vorgerechneter Basisregler-Sollwert (Mittelwert) durch eine Kaskadenschaltung korrigiert wird. Der Sollwert des Kaskadenreglers kann ebenfalls von der ALC-Steuerung vorgegeben werden.

Eine Alternative zu ALC-Steuerungen stellen sogenannte modellprädiktive Regler bzw. MPC-Regler (engl. Model Predictive Control) dar. MPC-Regler können insbesondere zur Regelung schwieriger und verkoppelter Mehrgrößen-Regelstecken eingesetzt werden. Sie eignen sich daher in besonderer Weise zum Einsatz in Luftzerlegungsanlagen Grundlage ist ein mathematisches Modell, das das Zeitverhalten von Regelgrößen (engl. Controlled Variable, CV) auf Veränderungen von Stellgrößen (engl. Manipulated Variable, MV) abbildet. In der Regelungstechnik üblich ist die Verwendung einfacher linearer Modelle erster Ordnung, insbesondere mit Totzeit (in sogenannten linearen MPC-Regler, LMPC). Alternativ können auch kompliziertere, zum Beispiel nicht-lineare Modelle (in sogenannten nichtlinearen MPC-Reglern, NMPC) eingesetzt werden. Der gesamte Prozess wird durch viele solcher Modelle in einer Matrix-Darstellung beschrieben. Ein sich ergebendes Gesamt-Prozessmodell wird zur Regelung benutzt, indem das Verhalten der Anlage in die Zukunft simuliert und schließlich der zeitliche Verlauf der Stellgrößen so berechnet wird, dass die Regelabweichungen minimiert und Zwangsbedingungen (engl. Limit Variables, LV) eingehalten werden. Ein MPC-Regler erlaubt eine Berücksichtigung der Kreuzbeziehungen und ermöglicht damit einen besonders stabilen Betrieb.

Die Grundidee der MPC-Regelung besteht, mit anderen Worten, darin, das zukünftige Verhalten des geregelten Systems über einen endlichen Zeithorizont vorherzusagen und eine optimale Regelungseingabe zu berechnen, die, während sie die Erfüllung gegebener Systembeschränkungen sicherstellt, eine a priori definierte Kostenfunktionalität minimiert. Genauer wird bei der MPC-Regelung ein Steuereingang berechnet, indem zu jedem Abtastzeitpunkt ein optimales Regelproblem mit endlichem Zeithorizont im offenen Regelkreis gelöst wird. Der erste Teil der resultierenden optimalen Eingangstrajektorie wird dann auf das System bis zum nächsten Abtastzeitpunkt angewendet, zu welchem der Horizont dann verschoben und das gesamte Verfahren erneut wiederholt wird. Die MPC ist insbesondere aufgrund ihrer Fähigkeit vorteilhaft, harte Zustands- und Eingangsbedingungen sowie ein geeignetes Leistungskriterium explizit in den Reglerentwurf einzubeziehen.

MPC-Regler können im stationären Betrieb eine Tieftemperatur-Luftzerlegungsanlage gut regeln. Lastwechsel bedeuten für den MPC-Regler die Vorgabe neuer Zielsollwerte für messbare Produktionsmengen, und der MPC-Regler regelt auf dieser Grundlage den ganzen Prozess zu dem neuen Lastfall ein. Der Verlauf des Lastwechsels und die Dauer sind jedoch nicht vorhersagbar, meist deutlich langsamer als bei einer ALC-Steuerung, und oft sehr unruhig. Ein Mechanismus, um Sollwerte lastabhängig vorzugeben, ist grundsätzlich nicht vorhanden.

Eine ALC-Steuerung erlaubt dagegen schnelle Lastwechsel und hält den Prozess dabei durch gleichzeitiges (synchrones) Verstellen aller relevanten unterlagerten Basisregler wesentlich stabiler als ein MPC-Regler Die Vorteile einer Mehrgrößenregelung sind andererseits aber nicht gegeben.

MPC-Regelung und ALC-Steuerung sind beides Techniken der gehobenen Prozessführung, die auf Sollwerte der untergeordneten Basisregler einwirken, um die Produktion anzupassen und gemessene Werte (Analysen, Temperaturen) zu regeln. Sie wurden bisher eher als Alternativen zueinander angesehen.

In der WO 2015/158431 A1 wird jedoch eine Kombination von ALC-Steuerung und MPC-Regler vorgeschlagen, bei der für mindestens einen der Prozessparameter einer Luftzerlegungsanlage die ALC-Steuerung und der MPC-Regler zusammenarbeiten.

Dabei wird mindestens ein von der ALC-Steuerung ermittelter Soll- oder Zielwert nicht wie üblich direkt an einen Basisregler eines ersten Prozessparameters übermittelt, sondern zusätzlich vom MPC-Regler beeinflusst und erst dann an den Basisregler weitergegeben.

In einer ersten Variante kann die ALC-Steuerung einen ersten Zielwert an den MPC-Regler ausgeben, der MPC-Regler berechnet aus dem ersten Zielwert einen Sollwert für den ersten Prozessparameter und gibt diesen an den Basisregler weiter. Weitere Prozessparameter werden vom MPC-Regler berechnet, um die Störung des Prozesses durch den ersten Prozessparameter zu minimieren. Dasselbe Prinzip kann für weitere Prozessparameter angewandt werden. In einer zweiten Variante kann die ALC-Steuerung sowohl einen ersten Zielwert als auch einen primären Sollwert für den Prozessparameter ausgeben. Ausgehend von dem ersten Zielwert berechnet der MPC-Regler eine Sollwertänderung für den von der ALC-Steuerung ausgegebenen primären Sollwert, und der geänderte (getrimmte) Sollwert (also ein sekundärer Sollwert) wird an den Basisregler für den ersten Prozessparameter übergeben. Dasselbe Prinzip kann für weitere Prozessparameter angewandt werden.

Es versteht sich, dass hierbei als MPC-Regler ein LMPC-Regler, ein NMPC-Regler oder eine beliebige Variante eines MPC-Reglers zum Einsatz kommen kann. Die Kombination von ALC-Steuerung und MPC-Regler ist also nicht auf eine spezifische Art des MPC-Reglers, beispielsweise einen LMPC-Regler, beschränkt, sondern der MPC-Regler wird, beispielsweise als LMPC-Regler oder NMPC-Regler, je nach Bedarf und nach Belieben des Fachmanns, ausgewählt.

Aus der US 2019/091859 A1 und der US 2018/218262 A1 sind ein Programm zur Robotersteuerung, das dann z.B. in der Produktion oder Logistik eingesetzt wird, sowie eine Steuerung eines Fahrzeugs für autonomes Fahren oder eines Roboter bekannt; daber werden neuronale Netze eingesetzt. Aus der US 2019/187631 A1 ist der Betrieb einer Luftzerlegungsanlage bekannt.

Es hat sich herausgestellt, dass die herkömmlichen Regelungsverfahren bei Luftzerlegungsanlagen und anderen verfahrenstechnischen Anlage nicht immer einen optimalen Betrieb sicherstellen können. Die vorliegende Erfindung stellt sich daher die Aufgabe, die Regelung von verfahrenstechnischen Anlagen, insbesondere Luftzerlegungsanlagen, zu verbessern.

### Offenbarung der Erfindung

Diese Aufgabe wird durch ein Verfahren zum Betreiben einer verfahrenstechnischen Anlage, insbesondere einer Luftzerlegungsanlage, eine verfahrenstechnische Anlage und ein Verfahren zum Umrüsten einer verfahrenstechnischen Anlage mit den jeweiligen Merkmalen der unabhängigen Patentansprüche gelöst. Ausgestaltungen der vorliegenden Erfindung sind jeweils Gegenstand der abhängigen Patentansprüche sowie der nachfolgenden Beschreibung.

### Vorteile der Erfindung

Die vorliegende Erfindung beruht auf der Erkenntnis, dass sich zur Regelung einer verfahrenstechnischen Anlage wie beispielsweise einer Luftzerlegungsanlage ein Regelungskonzept besonders eignet, das auf modellbasiertem (Deep) Reinforcement Learning beruht, wobei das verwendete Modell die Anlage oder zumindest einen Teil der Anlage abbildet und auf einem neuronalen Netz beruht. Die Regelung arbeitet in diesem Zusammenhang selbstoptimierend, d.h. sie verbessert die verwendeten Regelstrategien kontinuierlich und insbesondere auf Grundlage einer Bewertung der Ergebnisse, die mit früher verwendeten Regelstrategien und/oder früheren, in der Regelung verwendeten Parametern und Größen erhalten wurden. Dies wird insbesondere durch das Neutrainieren des neuronalen Netzes in der weiter unten im Detail erläuterten Weise erreicht.

Insgesamt schlägt die vorliegende Erfindung dabei ein Verfahren zum Betreiben einer verfahrenstechnischen Anlage, insbesondere einer Luftzerlegungsanlage, vor, bei dem ein oder mehrere Stellglieder in der verfahrenstechnischen Anlage unter Verwendung eines oder mehrerer Stellwerte eingestellt werden, wodurch ein oder mehrere Betriebsparameter der verfahrenstechnischen Anlage beeinflusst werden.

Bei den im Rahmen der vorliegenden Erfindung eingestellten Stellgliedern kann es sich um Ventile oder andere zur Beeinflussung der Flussrate eines oder mehrerer Stoffströme verwendete Armaturen oder Armaturengruppen handeln. Auch beispielsweise eine Stellvorrichtung zur Einstellung einer Verdichterleistung oder einer Turbine sowie ein Heizelement oder dergleichen kann ein entsprechendes Stellglied darstellen. Die Verstellung entsprechender Stellgliedern hat dabei einen direkten oder indirekten Einfluss auf hier als Betriebsparameter bezeichnete Kenngrößen, Messwerte bzw. Istwerte, beispielsweise einen Kolonnendruck, eine Kolonnentemperatur, ein Temperaturprofil in einer Kolonne, eine Stoffausbeute, eine Produktreinheit, eine Zusammensetzung bestimmter Stoffströme und dergleichen. Unter der Angabe, dass Betriebsparameter der verfahrenstechnischen Anlage beeinflusst werden, soll dabei eine gezielte Veränderung entsprechender Betriebsparameter, beispielsweise eine Temperatur-, Druck- oder Flussratenerhöhung oder -verringerung oder ein gezieltes Einwirken auf Stoffreinheiten oder Gemischzusammensetzungen, aber auch ein gezieltes Konstanthalten solcher Betriebsparameter, beispielsweise eines Temperaturprofils in einer Kolonne, verstanden werden.

Die vorliegende Erfindung verwendet eine Kostenfunktion, die im Rahmen der vorliegenden Erfindung insbesondere derart ausgestaltet ist, dass sie Verbrauchsparameter wie den Energieverbrauch oder die Menge der verwendeten Einsatzströme, beispielsweise von Einsatzluft, berücksichtigt und mit den jeweiligen Zielvorgaben, beispielsweise einer Produktmenge oder Produktreinheit, abwägt. Insbesondere geht im Rahmen der vorliegenden Erfindung bei Verwendung einer Luftzerlegungsanlage ein Strafterm (Penalty) für die verwendete Einsatzluftmenge mit einer insbesondere variablen Gewichtung in das Verfahren ein. Dies hat zur Folge, dass ein Schwerpunkt der Regelung auf die Einsparung von Einsatzluftmenge liegt, welche aufgrund der aufzuwendenen Verdichterleistung besondere Auswirkungen auf den Energiebedarf hat. Ferner werden sogenannte weiche Randbedingungen (Soft Constraints), insbesondere der Form a · exp(b · (x - c)^{d}), in die Kostenfunktion integriert. Diese beziehen sich auf weitere Betriebsparameter, die damit zwar ebenfalls einen Einfluss auf die Regelung haben, allerdings in geringerem Umfang als die Einsatzluftmenge. Es werden insbesondere keine Lagrange-Multiplikatoren verwendet, so dass der damit häufig verbundene Nachteil, dass schwer lösbare nichtlineare Gleichungssysteme entstehen, vermieden wird. Es wird insbesondere verhindert, dass ein unlösbares Optimierungsproblem entsteht.

Die Einstellung des einen oder der mehreren Stellglieder wird gemäß der vorliegenden Erfindung zumindest in einer Verfahrensphase unter Verwendung eines selbstoptimierenden Regelungsprozesses vorgenommen, wobei der selbstoptimierende Regelungsprozess der die Verwendung von modellbasiertem (Deep) Reinforcement Learning und die Berücksichtigung der bereits erwähnten Kostenfunktion umfasst, und wobei eine oder mehrere Komponenten der verfahrenstechnischen Anlage mittels eines neuronalen Netzes in einem Modell abgebildet werden, das bei dem modellbasiertem Deep Reinforcement Learning verwendet wird

Als Eingangswerte für das neuronale Netz (welches das Anlagenverhalten abbildet), werden neben historischen Stell- und Regelgrößen bezüglich der Betriebsparameter insbesondere noch weitere Prozessparameter verwendet.

In einer Ausgestaltung der Erfindung, die eine Luftzerlegungsanlage betrifft, umfassen die Regelgrößen bzw. Betriebsparameter eine oder mehrere Temperaturen und eine oder mehrere Sauerstoffanalysen, insbesondere zwei Temperaturen und drei Sauerstoffanalysen, im Kolonnensystem der Luftzerlegungsanlage. Die Stellgrößen sind insbesondere eine oder mehrere Massenflüsse und eine oder mehrere Ventilstellungen, im Beispiel insbesondere zwei Stoffflüsse und eine Ventilstellung. Zusätzlich werden dem neuronalen Netz aber auch insbesondere die Sumpfstände und Drücke der eingesetzten Doppelkolonne zugeführt. Hier werden für jeden Prozesswert beispielsweise eine vorgegebene Anzahl von Minuten betrachtet. Dadurch ergibt sich bei einer vorgegebenen Anzahl von Abtastwerten eines Prozessparameters pro Minute die um die Anzahl von Minuten multiplizierte Anzahl von Eingängen, um den aktuellen Stand (State) der Anlage abzubilden.

Neben dem State wird dem neuronalen Netz auch noch ein Vorschlag für die zukünftige Trajektorie der Stellgrößen übergeben. Im erwähnten Beispiel handelt es um drei Stellgrößen, so dass sich, wiederum für einen eine feste Anzahl von Minuten umfassenden Zeitraum bei einer festen Anzahl von Abtastwerten pro Minute die um die Anzahl von Minuten multiplizierte Anzahl von Eingängen ergibt.

Damit wird in der vorliegenden Erfindung das zukünftige Verhalten des geregelten Systems, also der verfahrenstechnischen Anlage, über einen vorgegebenen Zeithorizont mittels des neuronalen Netzes vorhergesagt. Auf diese Weise kann besser als in der modellprädiktiven Regelung eine optimale Regelungseingabe berechnet werden, die, während sie die Erfüllung gegebener Systembeschränkungen sicherstellt, die definierte Kostenfunktionalität minimiert. Der erste Teil der resultierenden, optimalen Eingangstrajektorie kann jedoch, wie grundsätzlich auch für die MPC beschrieben, bis zum nächsten Abtastzeitpunkt auf das System, d.h. die verfahrenstechnische Anlage angewendet werden, zu welchem der Horizont dann verschoben und das gesamte Verfahren erneut wiederholt wird. Die Verwendung eines neuronalen Netzes ist dabei gegenüber den aus der MPC bekannten Ansätzen durch seine Trainierbarkeit besser in der Lage, selbstoptimierend eine optimale Regelstrategie zu finden.

Die Ausgänge des neuronalen Netzes entsprechen, mit anderen Worten, einer Vorhersage, wie sich die Regelgrößen bzw. Betriebsparameter verändern werden. Bei den im Beispiel fünf Regelgrößen ergeben sich für einen in einer Anzahl von Minuten ausgedrückten Zeitraum bei einer festen Anzahl von Werten pro Minute wiederum die um die Anzahl von Minuten multiplizierte Anzahl von Werten als Anzahl der Ausgänge.

Das neuronale Netz selbst umfasst im Rahmen der vorliegenden Erfindung insbesondere ein "inneres" Modell, welches wiederholt in einer Schleife angewendet wird, um die vorgegene Anzahl Zeitschritte abzubilden. Dabei gibt jedes innere Modell im Beispiel eine Vorhersage für die fünf Regelgrößen. Das Modell kann auch als ein abgerolltes rekurrentes neuronales Netz implementiert bzw. als ein solches verstanden werden. Diese abgerollte Struktur bietet den Vorteil, dass für die Optimierung in der modellprädiktiven Regelung kein Integrierer benötigt wird und direkt den Gradienten der Ausgänge in Bezug auf die jeweiligen Stellgrößenvorschläge berechnet werden kann.

Zusätzlich hat man gegenüber einem One-Step-Ahead Vorhersagemodell (also bei einer reinen Feed-Forward-Struktur) den Vorteil, dass das neuronale Netz so trainiert wird, dass nicht nur der erste Vorhersageschritt gut angepasst wird, sondern ein Kompromiss für alle Vorhersageschritte erreicht wird. Dadurch verbessert sich auch die Vorhersagegüte für die späteren Schritte deutlich.

Aufgrund der sehr großen Datenhistorie ist in einer Ausgestaltung der vorliegenden Erfindung vorteilhafterweise vorgesehen, eine Relevanzprüfung von zum Trainieren des neuronalen Netzwerks verwendbaren Datenpunkten vorzunehmen. Hierzu kann eine Relevanzbewertung der Datenpunkte, beispielsweise umfassend ein 2-D-Clustering der Daten und eine relevanzbewertende Auswertung wie beispielsweise eine Hauptkomponentenanalyse, vorgenommen werden. Aus den Clustern werden dann Trainingsdaten "gezogen", also Trainingsdaten ausreichender Relevanz bestimmt, bis eine gewisse Größe des Datensets erreicht ist.

Die vorliegende Erfindung betrifft mit dem vorgeschlagenen Verfahren das Gebiet des maschinellen Lernens (engl. Machine Learning). Beim maschinellen Lernen werden Algorithmen und statistische Modelle eingesetzt, mit welchen Systeme, im vorliegenden Fall eine Regeleinrichtung, eine bestimmte Aufgabe, hier eine Regelaufgabe, ohne explizite Instruktionen ausführen können und sich stattdessen auf die verwendeten Modelle und hiervon abgeleitete Schlussfolgerungen stützen. Beispielsweise kann in einer Regeleinrichtung, die zum maschinellen Lernen eingesetzt wird, anstelle einer auf bestimmten Regeln basierende Regelstrategie eine Regelstrategie verwendet werden, die aus einer Analyse von historischen Daten und/oder Trainingsdaten abgeleitet wird, wobei die Analyse unter Verwendung des verwendeten Modells vorgenommen wird und dabei eine flexible Anpassung erfahren kann, die zu einer Optimierung verwendet wird.

Durch ein Training des beim maschinellen Lernen verwendeten Modells mit einer großen Anzahl von Trainingsdaten und zugehörigen Informationen zum Inhalt des Trainings verhält sich das Modell zunehmend zumindest näherungsweise wie das modellierte reale System, so dass anhand des Modells als vorteilhaft erkannte Aktionen, vorliegend Regelstrategien, für das reale System verwendet werden können.

Maschinelles Lernen kann, wie grundsätzlich bekannt und hier nicht näher erläutert, in Form des sogenannten Überwachten Lernens, des sogenannten Teilüberwachten Lernens oder in Form des Unüberwachten Lernens erfolgen. Diese Begriffe beziehen sich insbesondere auf die Art, wie das Modell trainiert wird. Zu weiteren Details in diesem Zusammenhang sei auf einschlägige Fachliteratur verwiesen.

Beim Reinforcement Learning (verstärkenden Lernen) handelt es sich um eine weitere Gruppe von maschinellen Lernalgorithmen. Beim Reinforcement Learning werden ein oder mehrere sogenannte Agenten darin geschult, in einer definierten Umgebung bestimmte Aktionen durchzuführen. Auf der Grundlage der durchgeführten Aktionen wird eine Belohnung berechnet, die auch negativ ausfallen kann. Beim Reinforcement Learning werden die Agenten darin geschult, mehrere Aktionen in Abstimmung aufeinander derart zu wählen, dass die kumulative Belohnung aus den Aktionen insgesamt erhöht wird, was dazu führt, dass die Software-Agenten die ihnen übertragene Aufgabe besser erfüllen. Der Belohnung im modellfreien Reinforcement Learning entspricht in der vorliegenden Erfindung zuvor erwähnte Kostenfunktion.

Deep Learning (mehrschichtiges Lernen, tiefes Lernen) bezeichnet eine Variante des maschinellen Lernens, in der die (künstliche) neuronale Netze (engl. Artificial Neural Networks, ANN) mit zahlreichen Zwischenschichten (engl. Hidden Layers) zwischen Eingabeschicht und Ausgabeschicht eingesetzt werden, so dass sich eine umfangreiche innere Struktur herausbildet. Deep Reinforcement Learning kombiniert Aspekte des Reinforcement Learning und des Deep Learning.

Künstliche neuronale Netze (nachfolgend auch kurz als neuronale Netze bezeichnet) sind Systeme, die von biologischen neuronalen Netzen inspiriert sind. Sie umfassen eine Vielzahl von miteinander verbundenen Knoten und eine Vielzahl von Verbindungen, sogenannten Kanten, zwischen den Knoten. Neben in der erwähnten Eingabeschicht bereitgestellten Knoten, den Eingangsknoten, die Eingangswerte empfangen, und den in der erwähnten Ausgabeschicht bereitgestellten Knoten, den Ausgangsknoten, die Ausgangswerte liefern, existieren versteckte Knoten, die (nur) mit anderen Knoten verbunden sind. Jeder Knoten repräsentiert ein künstliches Neuron. Über jede Kante können Informationen von einem Knoten zum anderen übertragen werden. Der Ausgang eines Knotens kann als eine (nichtlineare) Funktion seiner Eingänge (z.B. der Summe seiner Eingänge) definiert werden. Die Eingänge eines Knotens bzw. die Kante oder der Knoten, der den Eingang liefert, können in der Funktion gewichtet. Das Gewicht der Knoten und/oder der Kanten kann im Lernprozess angepasst werden.

Die Grundidee der vorliegenden Erfindung beruht in der Kombination des Deep Reinforcement Learning mit einem (ggf. weiteren) neuronalen Netz, das die erfindungsgemäß betriebene Anlage abbildet. Vorteilhafte Aspekte der Erfindung umfassen insbesondere, wie auch nachfolgend noch erläutert, das grundlegende Trainieren des im Modell verwendeten neuronalen Netzes, dass das neuronale Netz im Laufe des Anlagenbetriebs neu bzw. fortgesetzt trainiert wird, so dass eine kontinuierliche Verbesserung der Regelung erzielt wird, die spezifische Art der Erzeugung der Trainingsdaten und deren Selektion für den Trainingsprozess, und die dauerhafte Überprüfung der Modell- und Regelungsgüte im Betrieb mit automatischem Rückfall auf eine Basisregelung bei unzureichender Qualität.

Durch die vorliegende Erfindung kann insbesondere bei Lastwechseln eine deutlich bessere Regleranpassung und eine insgesamt bessere Energieeffizienz erzielt werden. Die Erfindung nutzt insbesondere die erwähnte Kostenfunktion, die vorteilhafterweise auf Grundlage von Produkt- (Reinheit, Zusammensetzung, Menge) oder Verbrauchskriterien (Energie, Edukte) der verfahrenstechnischen Anlage definiert werden, wie oben erwähnt. Dies ist beispielsweise in der einer herkömmlicherweise in entsprechenden Anlagen verwendeten MPC-Regelung nicht der Fall.

Die vorliegende Erfindung kann insbesondere umfassen, die verfahrenstechnische Anlage zunächst manuell und/oder unter Verwendung eines anderen Regelungsprozesses, beispielsweise unter Einsatz einer Kaskadenregelung oder einer linearen oder anderen MPC-Regelung zu betreiben, und den erfindungsgemäß vorgesehenen selbstoptimierenden Regelungsprozess bzw. das darin verwendete, die Anlage abbildende neuronale Netz unter Verwendung von hierdurch erhaltenen Trainingsdaten zu trainieren. Auf diese Weise, d.h. durch Traninieren mit historischen bzw. mittels eines anderen Regelungsprozesses erhaltenen realen Daten, kann dieses neuronale Netz dazu ertüchtigt werden, für bestimmte Stellwerte jeweils bestimmte Betriebsparameter der Anlage vorherzusagen. Ein unter Verwendung des neuronalen Netzes realisiertes und entsprechend (grund-)trainiertes Modell kann auf diese Weise im Rahmen der vorliegenden Erfindung zusammen mit der Kostenfunktion anschließend im Rahmen der erfindungsgemäß vorgesehenen Regeleinrichtung verwendet werden. Bei den Traniningsdaten kann es sich insbesondere um den einen oder die mehreren erwähnten Anlagenparameter handeln, die durch die Einstellung des einen oder der mehreren Stellwerte beeinflusst werden, wie ebenfalls erwähnt.

Mit anderen Worten umfasst das vorgeschlagene Verfahren vorteilhafterweise, dass die Einstellung des einen oder der mehreren Stellwerte in einer zweiten Verfahrensphase unter Verwendung des selbstoptimierenden Regelungsprozesses vorgenommen wird, dass die Anlage in einer ersten Betriebsphase, die vor der zweiten Betriebsphase liegt, manuell und/oder unter Verwendung eines weiteren, insbesondere eines nicht selbstoptimierenden Regelungsprozesses betrieben wird, und dass das (in dem selbstoptimierenden Regelungsprozess verwendete) neuronale Netz zunächst mittels in der ersten Betriebsphase erhaltener Trainingsdaten trainiert wird.

Anschließend kann das neuronale Netz mittels in der zweiten Betriebsphase erhaltener Trainingsdaten trainiert werden, d.h. mit Trainingsdaten, die sich aus dem Einsatz des selbstoptimierenden Regelungsprozesses ergeben, in dem das zuvor (grund-) trainierte neuronale Netz bereits zum Einsatz kommt. Hierdurch kann, wie auch nachfolgend noch detaillierter erläutert, eine kontinuierliche Verbesserung des Reglerverhaltens erzielt werden.

In einem ersten Zyklus der zweiten Betriebsphase, in welchem das neuronale Netz noch als ausschließlich mit den in der ersten Betriebsphase erhaltenen Trainingsdaten trainiert vorliegt, wird das Modell auf Grund der beschränkten Extrapolationsverhaltens typischerweise auch nur ähnliche Regelungsstrategien einsetzen, wie sie zuvor verwendet wurden, und dementsprechend ist zu erwarten, dass auch die Regelungsgüte ähnlich ist. Sobald nun aus der zweiten Betriebsphase Trainingsdaten zur Verfügung stehen, der selbstoptimierende Regelungsprozesses also zum Einsatz komm, können die neu gewonnen Trainingsdaten zu den bisher verfügbaren Trainingsdaten in einem entsprechenden Datensatz von Trainingsdaten hinzugefügt werden. Anschließend wird das neuronale Netz mit den vorher ermittelten und den neu ermittelten Trainingsdaten neu trainiert und in den Regelungsprozess integriert. Auch wenn die Regelungsstrategien immer ähnlich zu den bisherigen sind, so wird doch über die Zeit, durch das ständige Wiederholen entsprechender Modellupdates, und über die leichte Diskrepanz zu den vergangenen Strategien, eine immer weiter verbesserte Regelungsstrategie gefunden werden.

Im Endeffekt stellt das Modell zusammen mit der Kostenfunktion ein Skalarfeld im hyperdimensionalen Raum dar, in welchem in dem verwendeten Regelungsprozess durch einen Optimierer ein Minimum gesucht werden kann. Das Skalarfeld ist allerdings nur in solchen Bereichen valide, wo zuvor Trainingsdaten vorlagen. Hierbei wird in umliegenden Bereichen beispielsweise ein lokales Minimum gefunden. Je nachdem, welche Bewertung (positiver oder negativer) sich in einem neu trainierten Modell für entsprechende Bereiche ergibt, wird der der Regelungsprozess sich stärker in eine entsprechende Richtung orientieren oder nicht.

In dem erfindungsgemäß vorgeschlagenen Verfahren werden vorteilhafterweise ein oder mehrere Istwerte des einen oder der mehreren Betriebsparameter für einen oder mehrere zurückliegende Zeitpunkte erfasst. Unter Verwendung des einen oder der mehreren in dieser Weise erfassten Istwerte werden vorteilhafterweise ein oder mehrere Prognosewerte für den einen oder die mehreren Betriebsparameter für einen oder mehrere künftige Zeitpunkte ermittelt, und der eine oder die mehreren Stellwerte werden vorteilhafterweise unter Verwendung eines oder mehrerer Sollwerte für den einen oder die mehreren Betriebsparameter und unter Verwendung des einen oder der mehreren Prognosewerte mittels des Modells vorgegeben. Durch den Einsatz des vorgeschlagenen Verfahrens ergibt sich eine sukzessive Verbesserung der Regelung, insbesondere eine Verbesserung der Zuverlässigkeit der Prognosewerte, auf Grundlage derer die jeweiligen Einstellwerte ermittelt werden.

Insgesamt können im Rahmen der vorliegenden Erfindung mittels des neuronalen Netzes in wiederholten Explorationsschleifen neue Regelungsstrategien exploriert werden. Wie erwähnt, werden dabei vorteilhafterweise Trainingswerte verwendet, die aus einem initialen, mittels eines anderen Regelungsverfahrens durchgeführten oder manuellen Betrieb der verfahrenstechnischen Anlage stammen, und die sukzessive durch spätere Werte ersetzt werden, welche unter Verwendung des selbstoptimierenden Regelungsprozesses selbst erhalten werden, was zu einer zunehmenden Optimierung der Regelung führt.

Wie erwähnt, können das eine oder die mehreren Stellglieder insbesondere ein oder mehrere Ventile sein oder umfassen, der eine oder die mehreren Stellwerte können Stellwerte des einen oder der mehreren Ventile sein oder umfassen, und der eine oder die mehreren Betriebsparameter können ein oder mehrere Massenflüsse oder Temperaturen sein oder umfassen. Dies gilt insbesondere für den Fall, dass das vorgeschlagene Verfahren in einer Luftzerlegungsanlage eingesetzt wird. In einem spezifischen Beispiel werden ein Rücklaufventil, eine Einsatzluftmenge und ein Argonumsatz eingestellt.

In einer besonders bevorzugten Ausgestaltung des erfindungsgemäßen Verfahrens werden der eine oder die mehreren Stellwerte vor ihrer Verwendung zur Einstellung des einen oder der mehreren Stellglieder auf ihre Tauglichkeit untersucht. Dies kann insbesondere eine Plausibilisierung oder einen Vergleich mit zurückliegenden Werten zur Elimination von unplausiblen oder ungeeigneten Werten umfassen.

Der eine oder die mehreren Prognosewerte für den einen oder die mehreren Betriebsparameter für den einen oder die mehreren künftige Zeitpunkte können auch, in einer Ausgestaltung der vorliegenden Erfindung, mit später zu diesen Zeitpunkten erhaltenen realen Werten verglichen werden, wobei auf Grundlage des Vergleichs eine Prognosequalität ermittelt wird. Dies kann insbesondere zur kontinuierlichen Überwachung der Prognosequalität verwendet werden, um bei einer Verschlechterung über ein zulässiges Maß hinaus Maßnahmen einleiten zu können.

Insbesondere kann, mit anderen Worten, eine Anpassung des selbstoptimierenden Regelungsprozesses vorgenommen oder der selbstoptimierende Regelungsprozesses durch einen anderen Regelungsprozess ersetzt werden, wenn die ermittelte Prognosequalität eine vorgegebene Minimalqualität unterschreitet. Beispielsweise kann in diesem Fall auf einen (ggf. energetisch oder hinsichtlich der Ausbeute oder der Kostenfunktion schlechteren, aber zuverlässigeren) Fallback-Regelungsprozesses zurückgegriffen werden und ausgehend von diesem insbesondere eine Neuoptimierung in der erläuterten Weise eingeleitet werden. Wahlweise kann auch auf einen früher verwendeten Optimierungsstand zurückgegriffen werden, der zu diesem Zweck zwischengespeichert werden kann. Eine entsprechende Qualitätsbewertung kann auch das Identifizieren bestimmter zurückliegender Werte als vorteilhafte Trainingsdaten umfassen, wie bereits erwähnt.

Im Rahmen der vorliegenden Erfindung kann auch, in der bereits in der Einleitung beschriebenen Weise, der selbstoptimierende Regelungsprozess in Kombination mit einer ALC-Steuerung zum Einsatz kommen.

Die Erfindung betrifft auch eine verfahrenstechnischen Anlage, insbesondere eine Luftzerlegungsanlage, die dafür eingerichtet ist, ein oder mehrere Stellglieder in der verfahrenstechnischen Anlage unter Verwendung eines oder mehrerer Stellwerte einzustellen und dadurch einen oder mehrere Betriebsparameter der verfahrenstechnischen Anlage zu beeinflussen.

Erfindungsgemäß zeichnet sich die Anlage dadurch aus, dass eine Regeleinrichtung bereitgestellt ist, die dafür eingerichtet ist, die Einstellung des einen oder der mehreren Stellwerte zumindest in einer Verfahrensphase unter Verwendung eines selbstoptimierenden Regelungsprozesses vorzunehmen und den selbstoptimierenden Regelungsprozess unter Verwendung von modellbasiertem Deep Reinforcement Learning und unter Berücksichtigung einer Kostenfunktion durchzuführen, wobei eine oder mehrere Komponenten der verfahrenstechnischen Anlage mittels eines neuronalen Netzes in einem Modell abgebildet werden, das bei dem modellbasiertem Deep Reinforcement Learning verwendet wird.

Ein Verfahren zum Umrüsten einer verfahrenstechnischen Anlage, die dafür eingerichtet ist, ein oder mehrere Stellglieder in der verfahrenstechnischen Anlage unter Verwendung eines oder mehrerer Stellwerte einzustellen und dadurch einen oder mehrere Betriebsparameter der Anlage zu beeinflussen, ist ebenfalls Gegenstand der vorliegenden Erfindung.

Dieses Verfahren zeichnet sich erfindungsgemäß dadurch aus, dass bei dem Umrüsten der Anlage ein vorhandener Regelungsprozess, mittels dessen der eine oder die mehreren Stellwerte eingestellt werden, durch einen selbstoptimierenden Regelungsprozess ersetzt wird, wobei der selbstoptimierende Regelungsprozess der die Verwendung von modellbasiertem Deep Reinforcement Learning und die Berücksichtigung einer Kostenfunktion umfasst, und wobei eine oder mehrere Komponenten der verfahrenstechnischen Anlage mittels eines neuronalen Netzes in einem Modell abgebildet werden, das bei dem modellbasiertem Deep Reinforcement Learning verwendet wird. Das Ersetzen des vorhandenen Regelungsprozesses durch den selbstoptimierenden Regelungsprozess umfasst, Regelfunktionen des vorhandenen Regelungsprozesses sukzessive zu dem selbstoptimierenden Regelungsprozess zu transferieren. Mit anderen Worten werden also Regelfunktionen des vorhandenen Regelungsprozesses zunehmend, insbesondere nacheinander oder gruppenweise, nicht mehr mittels des vorhandenen Regelungsprozesses durchgeführt sondern mittels des selbstoptimierenden Regelungsprozesses.

Zu weiteren Merkmalen der erfindungsgemäß vorgesehenen verfahrenstechnischen Anlage, bzw. der durch das Verfahren zum Umrüsten umgerüsteten verfahrenstechnischen Anlage und weiteren Ausgestaltungen hiervon sei auf die obigen Erläuterungen bezüglich des erfindungsgemäßen Verfahrens und seiner Ausgestaltungen ausdrücklich verwiesen. Eine entsprechende Anlage ist insbesondere zur Durchführung eines Verfahrens eingerichtet, wie es zuvor in unterschiedlichen Ausgestaltungen erläutert wurde.

Weitere Aspekte der vorliegenden Erfindung werden unter Bezugnahme auf die beigefügten Zeichnungen erläutert.

### Kurze Beschreibung der Zeichnungen

Figur 1 veranschaulicht eine Luftzerlegungsanlage, die gemäß einer Ausgestaltung der vorliegenden Erfindung betrieben werden kann.
Figur 2 veranschaulicht schematisch ein Ablauf eines Verfahrens gemäß einer Ausgestaltung der vorliegenden Erfindung.
Figur 3 veranschaulicht schematisch Aspekte eines Verfahrens gemäß einer Ausgestaltung der vorliegenden Erfindung.
Figur 4 veranschaulicht gemäß einer Ausführungsform der Erfindung und gemäß einer nicht erfindungsgemäßen Ausführunsform erhaltene Verbrauchshistogramme.

### Ausführliche Beschreibung der Zeichnungen

In den Figuren sind einander baulich oder funktional entsprechende Elemente mit identischen Bezugszeichen angegeben und werden der Übersichtlichkeit halber nicht wiederholt erläutert. Wenn nachfolgend auf Verfahrensschritte Bezug genommen wird, betreffen die entsprechenden Erläuterungen in gleicher Weise Anlagenkomponenten, mit denen diese Verfahrensschritte durchgeführt werden, und umgekehrt.

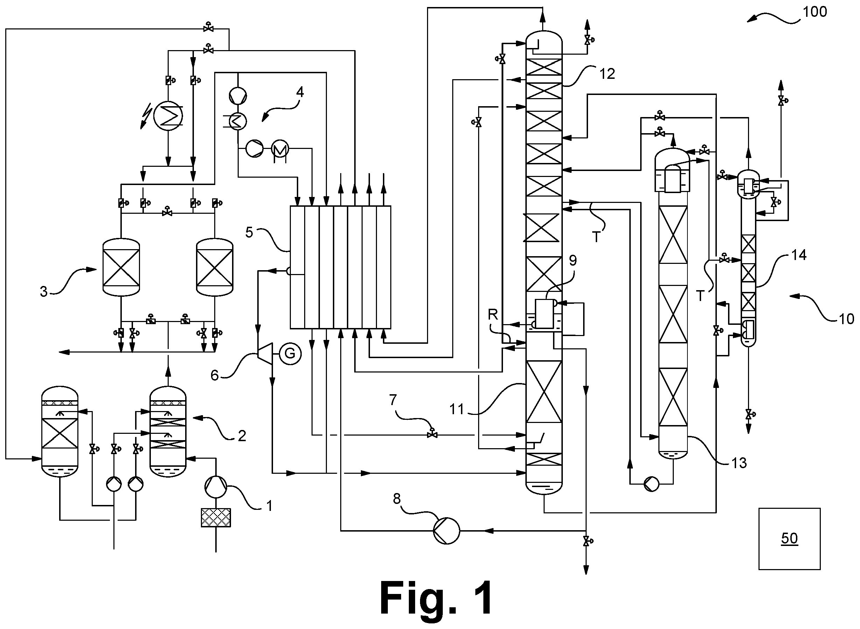

In Figur 1 ist beispielhaft eine Luftzerlegungsanlage 100 an sich bekannter Art dargestellt, die, insbesondere durch Einsatz einer schematisch veranschaulichten Regeleinrichtung 50, gemäß einer Ausgestaltung der vorliegenden Erfindung betrieben werden kann. Wie mehrfach zuvor erwähnt, eignet sich die vorliegende Erfindung auch zum Betrieb anderer verfahrenstechnischer Anlagen und ist nicht auf Luftzerlegungsanlagen beschränkt.

Luftzerlegungsanlagen der gezeigten Art sind vielfach an anderer Stelle beschrieben, beispielsweise bei H.-W. Häring (Hrsg.), Industrial Gases Processing, Wiley-VCH, 2006, insbesondere Abschnitt 2.2.5, "Cryogenic Rectification". Für detaillierte Erläuterungen zu Aufbau und Funktionsweise sei daher auf entsprechende Fachliteratur verwiesen. Eine Luftzerlegungsanlage zum Einsatz der vorliegenden Erfindung kann auf unterschiedlichste Weise ausgebildet sein.

Die in Figur 1 gezeigte Luftzerlegungsanlage verfügt unter anderem über einen Hauptluftverdichter 1, eine Vorkühleinrichtung 2, ein Reinigungssystem 3, eine Nachverdichteranordnung 4, einen Hauptwärmetauscher 5, eine Entspannungsturbine 6, eine Drosseleinrichtung 7, eine Pumpe 8 und ein Rekitfikationskolonnensystem 10. Das Rekitfikationskolonnensystem 10 umfasst eine Doppelkolonnenanordnung aus einer Hochdruckkolonne 11 und einer Niederdruckkolonne 12 sowie eine Rohargonkolonne 13 und eine Reinargonkolonne 14. Die gemäß einer Ausgestaltung der Erfindung vorgeschlagene Regelung kann dabei beispielsweise auf ein Refluxverhältnis, die Einsatzluftmenge und den Argonumsatz Einfluss nehmen, weitere Größen können Betriebsparameter einer Entspannungsmaschune und Pegelstände in den Kolonnen oder einem Teil der Kolonnen sein.

Wie die Erfindung nicht auf die Verwendung mit Luftzerlegungsanlagen wie der Luftzerlegungsanlage 100 beschränkt ist, kann sie auch mit anders als gezeigt ausgebildeten Luftzerlegungsanlagen verwendet werden, die eine geringere oder größere Anzahl an Rektifikationskolonnen in identischer oder abweichender Verschaltung miteinander aufweisen können.

In der gezeigten Luftzerlegungsanlage 100 wird ein Einsatzluftstrom mittels des Hauptluftverdichters 1 über ein nicht bezeichnetes Filter angesaugt und verdichtet. Der verdichtete Einsatzluftstrom wird der mit Kühlwasser betriebenen Vorkühleinrichtung 2 zugeführt. Der vorgekühlte Einsatzluftstrom wird in dem Reinigungssystem 3 aufgereinigt. In dem Reinigungssystem 3, das typischerweise ein Paar von im Wechselbetrieb eingesetzten Adsorberbehältern umfasst, wird der vorgekühlte Einsatzluftstrom weitgehend von Wasser und Kohlendioxid befreit.

Stromab des Reinigungssystems 3 wird der Einsatzluftstrom in zwei Teilströme aufgeteilt. Einer der Teilströme wird auf dem Druckniveau des Einsatzluftstroms in dem Hauptwärmetauscher 5 vollständig abgekühlt. Der andere Teilstrom wird in der Nachverdichteranordnung 4 nachverdichtet und ebenfalls in dem Hauptwärmetauscher 5 abgekühlt, jedoch nur auf ein Zwischentemperaturniveau. Dieser sogenannte Turbinenstrom wird nach der Abkühlung auf das Zwischentemperaturniveau mittels der Entspannungsturbine 6 auf das Druckniveau des vollständig abgekühlten Teilstroms entspannt, mit diesem vereinigt, und in die Hochdruckkolonne 11 eingespeist.

In der Hochdruckkolonne 11 werden eine sauerstoffangereicherte flüssige Sumpffraktion sowie eine stickstoffangereicherte gasförmige Kopffraktion gebildet. Die sauerstoffangereicherte flüssige Sumpffraktion wird aus der Hochdruckkolonne 11 abgezogen, teilweise als Heizmedium in einem Sumpfverdampfer der Reinargonkolonne 14 verwendet und jeweils in Anteilen in einen Kopfkondensator der Reinargonkolonne 14, einen Kopfkondensator der Rohargonkolonne 13 sowie die Niederdruckkolonne 12 eingespeist. In den Verdampfungsräumen der Kopfkondensatoren der Rohargonkolonne 13 und der Reinargonkolonne 14 verdampfendes Fluid wird ebenfalls in die Niederdruckkolonne 12 überführt.

Vom Kopf der Hochdruckkolonne 11 wird das gasförmige stickstoffreiche Kopfprodukt abgezogen, in einem Hauptkondensator, der eine wärmetauschende Verbindung zwischen der Hochdruckkolonne 11 und der Niederdruckkolonne 12 herstellt, verflüssigt, und in Anteilen als Rücklauf auf die Hochdruckkolonne 11 aufgegeben und in die Niederdruckkolonne 12 entspannt.

In der Niederdruckkolonne 12 werden eine sauerstoffreiche flüssige Sumpffraktion sowie eine stickstoffreiche gasförmige Kopffraktion gebildet. Erstere wird teilweise in der Pumpe 8 flüssig auf Druck gebracht, in dem Hauptwärmetauscher 5 erwärmt, und als Produkt bereitgestellt. Aus einer Flüssigkeitsrückhalteeinrichtung am Kopf der Niederdruckkolonne 12 wird ein flüssiger stickstoffreicher Strom abgezogen und als Flüssigstickstoffprodukt aus der Luftzerlegungsanlage 100 ausgeführt werden. Ein vom Kopf der Niederdruckkolonne 12 abgezogener gasförmiger stickstoffreicher Strom wird durch den Hauptwärmetauscher 5 geführt und als Stickstoffprodukt auf dem Druck der Niederdruckkolonne 12 bereitgestellt. Aus der Niederdruckkolonne 12 wird ferner ein Strom aus einem oberen Bereich abgezogen und nach Erwärmung in dem Hauptwärmetauscher 5 als sogenannter Unreinstickstoff in der Vorkühleinrichtung 2 bzw. nach einer Aufheizung mittels eines elektrischen Heizers in dem Reinigungssystem 3 verwendet.

Herkömmliche Luftzerlegungsanlagen der veranschaulichten Art können insbesondere unter Verwendung von Kaskadenreglern oder (linearer) MPC geregelt werden. Das Regelziel ist hier beispielsweise, ein bestimmtes Temperaturprofil in der Hochdruckkolonne 11 einzustellen. Hierbei kann die Regeleinrichtung 50 beispielsweise einen Rücklauf R des in einem Hauptkondensator 9 kondensierten Kopfgases auf die Hochdruckkolonne 11 regeln. Als Regelgrößen dienen beispielsweise eine oder mehrere Temperaturen in der Hochdruckkolonne 11, die mittels entsprechender Temperatursensoren erfasst werden. Eine entsprechende Regelung wirkt typischerweise auch auf eine Vielzahl weiterer Stellglieder zur Erzielung weiterer Regelziele ein.

Soll hier ein Verfahren gemäß einer Ausgestaltung der Erfindung zum Einsatz kommen, kann in der Regeleinrichtung 50 ein erläuterter selbstoptimerender Regelungsprozess implementiert werden. In einem ersten Schritt kann dabei die Regelung des Temperaturprofils in der Hochdruckkolonne 11 von dem selbstoptimierenden Regelungsprozess übernommen werden, der nun die Kontrolle über das Rücklaufventil für den Rücklauf R ausübt. Hierbei lässt sich insbesondere feststellen, dass bei Lastwechseln die Regelungsqualität deutlich verbessert wird. Ein LMPC wies in einem vergleichbaren Lastwechselszenario einen Root Mean Square Error (RMSE) von 283 mK für die Temperatur in der Druckkolonne auf, wohingegen der entsprechende, in einer Regelung gemäß einer Ausgestaltung der Erfindung erzielbare Wert bei 93 mK lag.

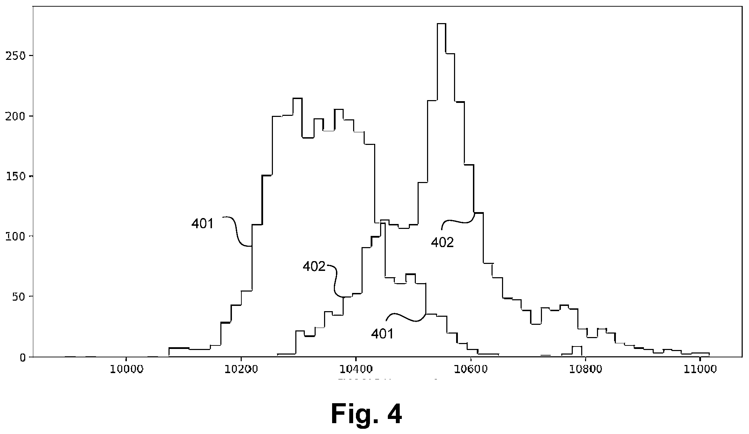

Im nächsten Schritt können alle (in einem Beispiel drei) Hauptregelkreise (im Beispiel betreffend eine Rücklaufmenge, die Einsatzluftmenge und einen Argonumsatz) an den selbstoptimierenden Regelungsprozess übergeben und der zuvor hierfür verwendete Regelungsprozess deaktiviert werden. Die gesamte Luftzerlegungsanlage 100 kann dann nur noch über einfache Kaskadenregler und den selbstoptimierenden Regelungsprozess betrieben werden. Hierbei kann eine Verringerung der eingesetzten Luftmenge um 2% festgestellt werden, wie in Figur 4 veranschaulicht. Als (Haupt-) Prozessgrößen können hierbei das Temperaturprofil in der Hochdruckkolonne 11 und der Niederdruckkolonne 12 sowie die Zusammensetzung eines aus der Niederdruckkolonne 11 in die Rohargonkolonne 13 überführten Transferstroms T verwendet werden, welche mit entsprechenden Sensoren ermittelt werden können. Als Stellgrößen können die eingesetzte Luftmenge, das den Rücklauf R auf die Hochdruckkolonne steuerende Rücklaufventil und der Argonumsatz (entsprechend einem Mengenstrom des Stoffstroms T) dienen. Dadurch ergibt sich ein 5x3 Regelungsproblem. Der selbstoptimierende Regelungsprozess kann mit weiteren Prozessgrößen als Input arbeiten, wie z.B. dem Reinargonumsatz (entsprechend einem Stoffstrom P vom Kopf der Rohargonkolonne 13 in die Reinargonkolonne 14), einem Flüssigsauerstoff-Spülsignal (damit sich keine Kohlenwasserstoffe im Sumpf der Niederdruckkolonne 12 anreichern bilden, muss dieser regelmäßig gespült werden, beispielsweise über die Innenverdichtungspumpe 8) und weiteren. Neben der Stabilisierung der drei Hauptprozessgrößen können auch die Produktreinheiten von gasförmigem Sauerstoff und Stickstoff mittels des selbstoptimierenden Regelungsprozesses stabilisiert werden. Die Werte aus dem selbstoptimierenden Regelungsprozess können dabei noch auf Plausibilität überprüft werden. Um den selbstoptimierenden Regelungsprozess nur mit den Hauptreglerkreisen zu belasten, können andere Regelkreise über lineare Gleichungen mitgefahren werden, wie zum Beispiel zur Einstellung der Flüssigkeitsstände in den Rektifikationskolonnen 11 bis 14.

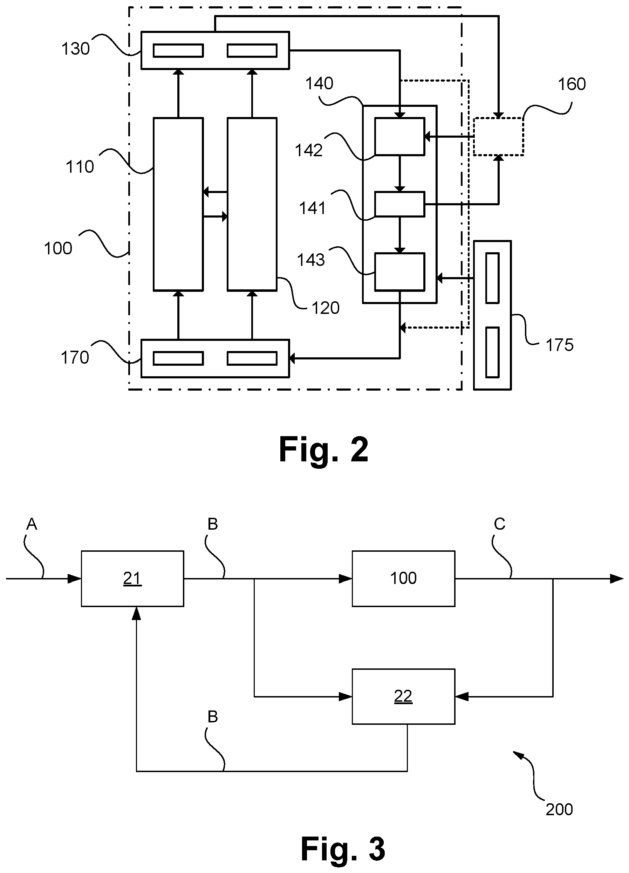

In Figur 2 ist schematisch ein Ablauf eines erfindungsgemäßen Verfahrens in einer bevorzugten Ausführungsform dargestellt, die die Luftzerlegungsanlage 100 regelungstechnisch veranschaulicht. Hierzu sind für die Luftzerlegungsanlage 100 zwei dort stattfindende bzw. ablaufende Prozesse 110, 120 gezeigt. Solche Prozesse können durch verschiedene Parameter definiert bzw. vorgegeben sein und insbesondere auch einer gewissen Wechselwirkung unterliegen.

Während dieser Prozesse 110, 120 - und damit während des Betriebs der Luftzerlegungsanlage 100 - werden verschiedene Aktionen vorgenommen und es können verschiedene Größe gemessen werden, um entsprechende Daten 130 zu erhalten. Beispielsweise kann ein Prozess einen gewissen Gasstrom umfassen, der in Abhängigkeit von einer Ventilstellung (als Stellgröße) einen gewissen Massenfluss (als Regelgröße) erreicht bzw. erreichen soll, wie am Beispiel der Figur 1 erläutert.

Das vorgeschlagene Verfahren ist, wie erwähnt, für praktisch jede großtechnische Anlage (Luftzerlegungsanlagen, petrochemische Anlagen, Erdgasanlagen und dergleichen) verwendbar. Dabei kommen als die zu regelnden Prozesse zweckmäßigerweise komplexe Subsysteme in Betracht, die mit klassischen Regelungsverfahren schwierig zu beherrschen sind, wie z.B. die Regelung einer mehrphasigen Leitung, einer Destillationskolonne o.ä. Selbst kleine Teilsysteme können mit klassischen Methoden mitunter überraschend schwierig zu regeln sein, wenn etwa nicht nur die aktuellen Messgrößen (Druck, Füllstand etc.) die Regelstrategie beeinflussen, sondern auch die Historie dieser Messgrößen mit in Betracht gezogen werden sollen oder müssen (weil z.B. Totzeiten im System vorhanden sind). Mit einem neuronalen Netz lassen sich entsprechende Anlagen gut abbilden. Hier kommt eine spezielle Abwandlung zwischen Feed-Forward Netz und Recurrent Netz zum Einsatz, wie bereits oben erwähnt. Da das neuronale Netz mit normalen Betriebsdaten trainiert wird, stellt diese Kombination sicher, dass nur das Anlagenverhalten gelernt wird und nicht das gesamte Systemverhalten (mit Anlage und Regler).

Da solche Prozesse typischerweise geregelt werden und somit ein entsprechender Regelkreis vorliegt, werden dabei auch Istwerte entsprechender Regelgrößen erfasst. Im Rahmen der erhaltenen Daten 130 werden diese Istwerte dann einer modellprädiktiven Regelung bzw. einem modellprädiktiven Regler 140 zugeführt, der beispielsweise auf einer geeigneten Recheneinheit wie der zuvor veranschaulichten Regeleinrichtung 50 ausgeführt wird.

Der modellprädiktive Regler 140 beinhaltet nun ein Modell 142 der verfahrenstechnischen Anlage, das zumindest die relevanten Prozesse 110, 120, die geregelt werden sollen, bzw. die entsprechenden Parameter, abbildet. Das Modell 142 wird dabei als neuronales Netz abgebildet bzw. dargestellt.

Anhand der Istwerte und/oder weiterer Daten über die Prozesse können nun - im Rahmen der modellprädiktiven Regelung - Vorhersagen über einen zukünftigen Verlauf bzw. ein zukünftiges Verhalten dieser Daten erhalten werden. Im Rahmen einer Optimierung werden Stellgrößen für die Regelkreise bzw. Prozesse gesucht, mit denen beispielsweise von extern bzw. einem Bediener oder gemäß einem vorgegebenen Ablaufplan oder dergleichen - vorgegebene Sollwerte 175, die in 143 verwendet werden, von den Regelgrößen gut und auch gleichzeitig erreicht werden können.

Dabei gefundene Werte 170 der Stellgrößen werden noch von einem zusätzlichen Advanced Process Control System (APCS) auf Plausibilität geprüft und anschließend den betreffenden Prozessen 110, 120 zugeführt bzw. die Stellgrößen werden dort eingestellt. Das APCS kontrolliert dabei zusätzlich niedrig priorisierte Regelkreise über einfache Feed-Forward und Kaskaden-Regler, um die benötigte Rechenkapazität des modell-prädiktiven Reglers und dessen Modellkomplexität zu begrenzen.

Zusätzlich wird die Qualität der Vorhersagen in einem vergangenen Zeitraum, bei welchem auch die realen Werte bereits vorliegen, verglichen und überprüft, wie mit 141 veranschaulicht. Wenn im Rahmen der Überprüfung 141 der Vorhersagequalität festgestellt wird, dass die Vorhersagequalität außerhalb des vorgegebenen Bereichs liegt und somit keine ausreichende Qualität aufweist, kann auf die Basisregelung der Anlage 100 umgeschaltet werden, um einen sicheren Betrieb zu gewähren. Dies ist durch einen gestrichelten Pfeil angedeutet. Auch wird während der Optimierung in einer Ausgestaltung der Erfindung insbesondere gewährleistet, dass sich die Vorschläge des Optimierers für die Stellgrößen in einem für das neuronale Netz validen Bereich befinden. Mit 160 ist soll das Training der neuronalen Netze veranschaulicht werden.

Das neuronale Netz selbst wird in regelmäßigen Abständen z.B. täglich mit den neu gewonnen historischen Daten trainiert. Dabei bekommt das Modell regelmäßig Feedback, wie gut die tatsächlich angewendeten Stellgrößentrajektorien dazu beigetragen haben das Regelungsproblem zu lösen. So kann sich der Regler ohne externe Hilfe durch bspw. Operator oder Regelungsingenieure weiter verbessern. Während dieses Trainierens wird der Betrieb der verfahrenstechnischen Anlage mit dem bis eben verwendeten neuronalen Netz vorgenommen.

Dieses Trainieren erfolgt insbesondere auch basierend auf den bei den Prozessen 30 110, 120 bzw. allgemein während des Betriebs der verfahrenstechnischen Anlage gewonnen Daten 130. Da das Datenset mit der Zeit immer mehr Daten aus dem Betrieb unter Verwendung des als neuronales Netz abgebildeten Modells 142 beinhaltet, wird es für das neuronale Netz immer leichter ein qualitativhochwertiges Abbild des Anlagenverhaltens zu erlernen.

Das Trainieren kann insbesondere auf einer separaten, auch externen bzw. entfernten Recheneinheit 185 erfolgen, um auf der Recheneinheit 180 Ressourcen einzusparen. Dabei bilden die Recheneinheiten 180 und 185 zusammen aber ein Steuerungs- und Regelungssystem für die verfahrenstechnische Anlage 100, um diese mit dem vorgeschlagenen Verfahren zu betreiben.

Figur 3 veranschaulicht schematisch Aspekte eines Verfahrens gemäß einer Ausgestaltung der vorliegenden Erfindung, wobei Details eines Regelungsprozesses gezeigt und insgesamt mit 200 bezeichnet sind.

Der Regelungsprozess 200 wirkt auf eine Anlage bzw. ein Verfahren ein, beispielsweise die zuvor veranschaulichte Luftzerlegungsanlage 100. Ein Optimierungsschritt 21 und ein Prognoseschritt 22 sind Teil des Regelungsprozesses 200. Dem Optimierungsschritt 21 wird, wie anhand eines Pfeils A veranschaulicht, ein gewünschter Anlagenparameter, beispielsweise eine Kolonnentemperatur, zugeführt. Der Optimierungsschritt 21 berechnet hieraus einen Stellwert B für eine Flussrate für einen momentanen Zyklus, welcher in dem Verfahren, z.B. der Luftzerlegungsanlage 100, verwendet wird. Erhaltene Istwerte C können, beispielsweise für 20 zurückliegende Zyklen, dem Prognoseschritt 22 zugeführt werden, der auf dieser Grundlage und auf Grundlage des Stellwerts B eine Temperaturprognose D für künftige Temperaturen vornimmt. Diese wird in dem Optimierungsschritt 21 verwendet. Der Prognoseschritt 22 arbeitet in der hier veranschaulichten Ausgestaltung unter Verwendung eines Modells auf Grundlage eines neuronalen Netzes.

Mit anderen Worten werden Stellglieder, beispielsweise Ventile, in der verfahrenstechnischen Anlage 100 unter Verwendung eines oder mehrerer Stellwerte B eingestellt, wodurch ein oder mehrere Betriebsparameter der verfahrenstechnischen Anlage 100 beeinflusst werden. Dies erfolgt unter Verwendung des hier veranschaulichten selbstoptimierenden Regelungsprozesses 200, wobei der selbstoptimierende Regelungsprozess der die Verwendung von modellbasiertem Deep Reinforcement Learning und die Berücksichtigung einer Kostenfunktion in 143 umfasst. Eine oder mehrere Komponenten der verfahrenstechnischen Anlage 100 werden mittels eines neuronalen Netzes in einem Modell abgebildet werden, das in dem Prognoseschritt 22 und damit bei dem modellbasiertem Deep Reinforcement Learning in dem Regelungsprozess 200 verwendet wird.

Ein oder mehrere Istwerte C des einen oder der mehreren Betriebsparameter werden, wie in Figur 3 veranschaulicht, für einen oder mehrere zurückliegende Zeitpunkte erfasst und ein oder mehrere Prognosewerte D für den einen oder die mehreren Betriebsparameter werden für einen oder mehrere künftige Zeitpunkte unter Verwendung des einen oder der mehreren Istwerte C unter Verwendung des selbstoptimierenden Regelungsprozesses ermittelt. Der eine oder die mehreren Stellwerte B werden unter Verwendung eines oder mehrerer Sollwerte A für den einen oder die mehreren Betriebsparameter und unter Verwendung des einen oder der mehreren Prognosewerte B unter Verwendung des selbstoptimierenden Regelungsprozesses vorgegeben.

In Figur 4 sind gemäß einer Ausführungsform der Erfindung und gemäß einer nicht erfindungsgemäßen Ausführungsform erhaltene Verbrauchshistogramme dargestellt. Diese geben jeweils den Verbrauch von Einsatzluft für unterschiedliche Betriebszustände einer Luftzerlegungsanlage an, wobei auf der Horizontalachse eine Einsatzluftmenge in ... und auf der Vertikalachse eine Anzahl von entsprechenden Abtastwerten entsprechend unterschiedlichen Betriebszeitpunkten veranschaulicht ist. Mit 401 ist ein gemäß einer Ausgestaltung der Erfindung erhaltenes Verbrauchshistogramm, mit 402 ein gemäß einer nicht erfindungsgemäßen Ausgestaltung erhaltenes Verbrauchshistogramm dargestellt. Wie hieraus ersichtlich, ist der Verbrauch an Einsatzluft bei Einsatz des erfindungsgemäß vorgesehenen Verfahrens in der überwiegenden Anzahl an Fällen geringer als der nicht erfindungsgemäßen Ausgestaltung.

## Patentansprüche

1. Verfahren zum Betreiben einer verfahrenstechnischen Anlage (100), bei dem ein oder mehrere Stellglieder in der verfahrenstechnischen Anlage (100) unter Verwendung eines oder mehrerer Stellwerte eingestellt werden, wodurch ein oder mehrere Betriebsparameter der verfahrenstechnischen Anlage (100) beeinflusst werden, wobei das eine oder die mehreren Stellglieder ein oder mehrere Massenflüsse und/oder Ventile sind oder umfassen, der eine oder die mehreren Stellwerte Stellwerte des einen oder der mehreren Massenflüsse und/oder Ventile sind oder umfassen, und der eine oder die mehreren Betriebsparameter ein oder mehrere Massenflüsse und/oder Stoffkonzentrationen und/oder Temperaturen sind oder umfassen, **dadurch gekennzeichnet, dass** die Einstellung des einen oder der mehreren Stellwerte zumindest in einer Verfahrensphase unter Verwendung eines selbstoptimierenden Regelungsprozesses vorgenommen wird, wobei der selbstoptimierende Regelungsprozess die Verwendung von modellbasiertem Deep Reinforcement Learning und die Berücksichtigung einer Kostenfunktion umfasst, und wobei eine oder mehrere Komponenten der verfahrenstechnischen Anlage (100) mittels eines neuronalen Netzes in einem Modell abgebildet werden, wobei das neuronale Netz ein Verhalten der verfahrenstechnischen Anlage (100) abbildet und bei dem modellbasierten Deep Reinforcement Learning verwendet wird,
wobei ein zukünftiges Verhalten der verfahrenstechnischen Anlage über einen vorgegebenen Zeithorizont mittels des neuronalen Netzes im Rahmen einer Regelung des einen oder der mehreren Betriebsparameter der verfahrenstechnischen Anlage (100) vorhergesagt wird.

2. Verfahren nach Ansrpuch 1, bei dem die Einstellung des einen oder der mehreren Stellwerte in einer zweiten Verfahrensphase unter Verwendung des selbstoptimierenden Regelungsprozesses vorgenommen wird, wobei die Anlage in einer ersten Betriebsphase, die vor der zweiten Betriebsphase liegt, manuell und/oder unter Verwendung eines weiteren Regelungsprozesses betrieben wird, und wobei das neuronale Netz zunächst mittels in der ersten Betriebsphase erhaltener Trainingsdaten trainiert wird.

3. Verfahren nach Anspruch 2, bei dem das das neuronale Netz anschließend mittels in der zweiten Betriebsphase erhaltener Trainingsdaten trainiert wird, und/oder bei dem die Trainingsdaten jeweils bestimmten Stellwerten zugeordnete Betriebsparameter umfassen.

4. Verfahren nach einem der vorstehenden Ansprüche, bei dem mittels der Kostenfunktion Verbrauchsparameter berücksichtigt und mit jeweiligen Zielvorgaben agebwägt werden.

5. Verfahren nach einem der vorstehenden Ansprüche, bei dem ein oder mehrere Istwerte des einen oder der mehreren Betriebsparameter für einen oder mehrere zurückliegende Zeitpunkte erfasst werden, bei dem ein oder mehrere Prognosewerte für den einen oder die mehreren Betriebsparameter für einen oder mehrere künftige Zeitpunkte unter Verwendung des einen oder der mehreren Istwerte unter Verwendung des selbstoptimierenden Regelungsprozesses ermittelt werden, und bei dem der eine oder die mehreren Stellwerte unter Verwendung eines oder mehrerer Sollwerte für den einen oder die mehreren Betriebsparameter und unter Verwendung des einen oder der mehreren Prognosewerte unter Verwendung des selbstoptimierenden Regelungsprozesses vorgegeben werden.

6. Verfahren nach einem der vorstehenden Ansprüche, bei dem mittels des neuronalen Netzes in wiederholten Explorationsschleifen neue Regelungsstrategien exploriert werden.

7. Verfahren nach einem der vorstehenden Ansprüche, bei dem der eine oder die mehreren Stellwerte vor ihrer Verwendung zur Einstellung des einen oder der mehreren Stellglieder auf ihre Tauglichkeit untersucht werden.

8. Verfahren nach einem der vorstehenden Ansprüche, bei dem der eine oder die mehreren Prognosewerte für den einen oder die mehreren Betriebsparameter für den einen oder die mehreren künftige Zeitpunkte mit später zu diesen Zeitpunkten erhaltenen realen Werten verglichen werden, wobei auf Grundlage des Vergleichs eine Prognosequalität ermittelt wird.

9. Verfahren nach Anspruch 8, bei dem eine Anpassung des selbstoptimierenden Regelungsprozesses vorgenommen oder der selbstoptimierende Regelungsprozesses durch einen anderen Regelungsprozess ersetzt wird, wenn die ermittelte Prognosequalität eine vorgegebene Minimalqualität unterschreitet.

10. Verfahren nach einem der vorstehenden Ansprüche, bei dem eine verfahrenstechnische Anlage (100) betrieben wird, in der eine Tieftemperaturtrennung von Komponentengemischen erfolgt, wobei insbesondere eine Luftzerlegungsanlage als die verfahrenstechnische Anlage (100) betrieben wird.

11. Verfahrenstechnische Anlage (100), die dafür eingerichtet ist, ein oder mehrere Stellglieder in der verfahrenstechnischen Anlage (100) unter Verwendung eines oder mehrerer, mittels der Stellwerte einzustellen und dadurch einen oder mehrere Betriebsparameter der verfahrenstechnischen Anlage (100) zu beeinflussen, wobei das eine oder die mehreren Stellglieder ein oder mehrere Massenflüsse und/oder Ventile sind oder umfassen, der eine oder die mehreren Stellwerte Stellwerte des einen oder der mehreren Massenflüsse und/oder Ventile sind oder umfassen, und der eine oder die mehreren Betriebsparameter ein oder mehrere Massenflüsse und/oder Stoffkonzentrationen und/oder Temperaturen sind oder umfassen, **dadurch gekennzeichnet, dass** eine Regeleinrichtung (50) bereitgestellt ist, die dafür eingerichtet ist, die Einstellung des einen oder der mehreren Stellwerte zumindest in einer Verfahrensphase unter Verwendung eines selbstoptimierenden Regelungsprozesses vorzunehmen und den selbstoptimierenden Regelungsprozess unter Verwendung von modellbasiertem Deep Reinforcement Learning und unter Berücksichtigung einer Kostenfunktion durchzuführen, wobei eine oder mehrere Komponenten der verfahrenstechnischen Anlage (100) mittels eines neuronalen Netzes in einem Modell abgebildet werden, wobei das neuronale Netz ein Verhalten der verfahrenstechnischen Anlage (100) abbildet und bei dem modellbasiertem Deep Reinforcement Learning verwendet wird, wobei die verfahrenstechnische Anlage eingerichtet ist, ein zukünftiges Verhalten der verfahrenstechnischen Anlage über einen vorgegebenen Zeithorizont mittels des neuronalen Netzes im Rahmen einer Regelung des einen oder der mehreren Betriebsparameter der verfahrenstechnischen Anlage (100) vorherzusagen.

12. Anlage (100) nach Anspruch 11 die derart ausgebildet ist, dass darin eine Tieftemperaturtrennung von Komponentengemischen erfolgt, und die insbesondere als Luftzerlegungsanlage ausgebildet ist.

13. Verfahren zum Umrüsten einer verfahrenstechnischen Anlage (100), die dafür eingerichtet ist, ein oder mehrere Stellglieder in der verfahrenstechnischen Anlage (100) unter Verwendung eines oder mehrerer Stellwerte einzustellen und dadurch einen oder mehrere Betriebsparameter der Anlage (100) zu beeinflussen, wobei das eine oder die mehreren Stellglieder ein oder mehrere Massenflüsse und/oder Ventile sind oder umfassen, der eine oder die mehreren Stellwerte Stellwerte des einen oder der mehreren Massenflüsse und/oder Ventile sind oder umfassen, und der eine oder die mehreren Betriebsparameter ein oder mehrere Massenflüsse und/oder Stoffkonzentrationen und/oder Temperaturen sind oder umfassen, **dadurch gekennzeichnet, dass** bei dem Umrüsten der Anlage ein vorhandener Regelungsprozess, mittels dessen der eine oder die mehreren Stellwerte eingestellt werden, durch einen selbstoptimierenden Regelungsprozess ersetzt wird, wobei der selbstoptimierende Regelungsprozess die Verwendung von modellbasiertem Deep Reinforcement Learning und die Berücksichtigung einer Kostenfunktion umfasst, und wobei eine oder mehrere Komponenten der verfahrenstechnischen Anlage (100) mittels eines neuronalen Netzes in einem Modell abgebildet werden, wobei das neuronale Netz ein Verhalten der verfahrenstechnischen Anlage (100) abbildet und bei dem modellbasiertem Deep Reinforcement Learning verwendet wird, und dass das Ersetzen des vorhandenen Regelungsprozesses durch den selbstoptimierenden Regelungsprozess umfasst, Regelfunktionen des vorhandenen Regelungsprozesses sukzessive zu dem selbstoptimierenden Regelungsprozess zu transferieren, wobei die verfahrenstechnische Anlage eingerichtet wird, ein zukünftiges Verhalten der verfahrenstechnischen Anlage über einen vorgegebenen Zeithorizont mittels des neuronalen Netzes im Rahmen einer Regelung des einen oder der mehreren Betriebsparameter der verfahrenstechnischen Anlage (100) vorherzusagen.

## Claims

1. A method for operating a process system (100) in which one or more actuators in the process system (100) are set by means of one or more manipulated variable values, whereby one or more operating parameters of the process system (100) are influenced, wherein the one or more actuators are or comprise one or more mass flows and/or valves, the one or more manipulated variable values are or comprise manipulated variable values of the one or more mass flows and/or valves, and the one or more operating parameters are or comprise one or more mass flows and/or substance concentrations and/or temperatures, **characterized in that** the setting of the one or more manipulated variable values is carried out at least in a process phase by means of a self-optimizing control process, wherein the self-optimizing control process comprises the use of model-based deep reinforcement learning and the taking into consideration of a cost function, and wherein one or more components of the process system (100) are represented by means of a neural network in a model, wherein the neural network represents a behavior of the process system (100) and is used in the model-based deep reinforcement learning, wherein a future behavior of the process system over a predetermined time horizon is predicted by means of the neural network as part of a control of the one or more operating parameters of the process system (100).

2. The method according to claim 1, in which method the setting of the one or more manipulated variable values is carried out in a second process phase by means of the self-optimizing control process, wherein the system is operated in a first operating phase, which precedes the second operating phase, manually and/or by means of a further control process, and wherein the neural network is first trained by means of training data obtained in the first operating phase.

3. The method according to claim 2, in which method the the neural network is subsequently trained by means of training data obtained in the second operating phase, and/or in which the training data in each case comprise operating parameters assigned to specific manipulated variable values.

4. The method according to any one of the preceding claims, in which method consumption parameters are taken into account by means of the cost function and are assessed with respect to respective target parameters.

5. The method according to any one of the preceding claims, in which method one or more actual values of the one or more operating parameters are acquired for one or more past instants at which one or more prediction values for the one or more operating parameters are determined for one or more future instants using the one or more actual values by means of the self-optimizing control process, and in which the one or more manipulated variable values are specified by means of one or more setpoint values for the one or more operating parameters and by means of the one or more prediction values by means of the self-optimizing control process.

6. The method according to any one of the preceding claims, in which method new control strategies are explored by means of the neural network in repeated exploration loops.

7. The method according to any one of the preceding claims, in which method the one or more manipulated variable values are assessed for their suitability prior to their use to set the one or more actuators.

8. The method according to any one of the preceding claims, in which method the one or more prediction values for the one or more operating parameters for the one or more future instants are compared to real values later obtained at these instants, wherein a prediction quality is determined on the basis of the comparison.

9. The method according to claim 8, in which method an adaptation of the self-optimizing control process is performed or the self-optimizing control process is replaced by a different control process if the determined prediction quality falls below a specified minimum quality.

10. The method according to any one of the preceding claims, in which method a process system (100) is operated in which a cryogenic separation of component mixtures takes place, wherein in particular an air fractionation plant is operated as the process system (100).

11. A process system (100) which is designed to set one or more actuators in the process system (100) by means of one or more manipulated variable values and thereby influence one or more operating parameters of the process system (100), wherein the one or more actuators are or comprise one or more mass flows and/or valves, the one or more manipulated variable values are or comprise manipulated variable values of the one or more mass flows and/or valves, and the one or more operating parameters are or comprise one or more mass flows and/or substance concentrations and/or temperatures, **characterized in that** a control device (50) is provided which is configured to carry out the setting of the one or more manipulated variable values at least in a process phase by means of a self-optimizing control process and to carry out the self-optimizing control process using model-based deep reinforcement learning and taking into consideration a cost function, wherein one or more components of the process system (100) are represented by means of a neural network in a model, wherein the neural network represents a behavior of the process system (100) and is used in the model-based deep reinforcement learning, wherein the process system is configured to predict a future behavior of the process system over a predetermined time horizon by means of the neural network as part of a control of the one or more operating parameters of the process system (100).

12. A system (100) according to claim 11, which is designed in such a way that a cryogenic separation of component mixtures is carried out therein, and is designed in particular as an air fractionation plant.

13. A method for converting a process system (100) which is configured to set one or more actuators in the process system (100) by means of one or more manipulated variable values and thereby influence one or more operating parameters of the system (100), wherein the one or more actuators are or comprise one or more mass flows and/or valves, the one or more manipulated variable values are or comprise manipulated variable values of the one or more mass flows and/or valves, and the one or more operating parameters are or comprise one or more mass flows and/or substance concentrations and/or temperatures, **characterized in that** during the conversion of the system, an existing control process by means of which the one or more manipulated variable values are set is replaced by a self-optimizing control process, wherein the self-optimizing control process comprises the use of model-based deep reinforcement learning and the taking into consideration of a cost function, and wherein one or more components of the process system (100) are represented by means of a neural network in a model, wherein the neural network represents a behavior of the process system (100) and is used in the model-based deep reinforcement learning, and that the replacement of the existing control process with the self-optimizing control process comprises transferring control functions of the existing control process subsequent to the self-optimizing control process, wherein the process system is configured to predict a future behavior of the process system over a predetermined time horizon by means of the neural network as part of a control of the one or more operating parameters of the process system (100).

## Revendications

1. Procédé permettant de faire fonctionner une installation d'ingénierie des procédés (100), dans lequel un ou plusieurs organes de réglage sont réglés dans l'installation d'ingénierie des procédés (100) à l'aide d'une ou de plusieurs valeurs de réglage, moyennant quoi un ou plusieurs paramètres de fonctionnement de l'installation d'ingénierie des procédés (100) sont influencés, dans lequel le ou les organes de réglage sont ou comprennent un ou plusieurs flux massiques et/ou soupapes, la ou les valeurs de réglage sont ou comprennent des valeurs de réglage du ou des flux massiques et/ou soupapes, et le ou les paramètres de fonctionnement sont ou comprennent un ou plusieurs flux massiques et/ou concentrations de substances et/ou températures, **caractérisé en ce que** le réglage de la ou des valeurs de réglage est effectué au moins dans une phase de procédé à l'aide d'un processus de régulation à optimisation automatique, dans lequel le processus de régulation à optimisation automatique comprend l'utilisation d'un apprentissage par renforcement profond basé sur un modèle et la prise en compte d'une fonction de coût, et dans lequel un ou plusieurs composants de l'installation d'ingénierie des procédés (100) sont représentés dans un modèle au moyen d'un réseau neuronal, dans lequel le réseau neuronal représente un comportement de l'installation d'ingénierie des procédés (100) et est utilisé dans l'apprentissage par renforcement profond basé sur un modèle, dans lequel un comportement futur de l'installation d'ingénierie des procédés est prédit sur un horizon temporel prédéfini au moyen du réseau neuronal dans le cadre d'une régulation du ou des paramètres de fonctionnement de l'installation d'ingénierie des procédés (100).

2. Procédé selon la revendication 1, dans lequel le réglage de la ou des valeurs de réglage est effectué dans une seconde phase de procédé à l'aide du processus de régulation à optimisation automatique, dans lequel l'installation fonctionne manuellement et/ou à l'aide d'un autre processus de régulation dans une première phase de fonctionnement qui se situe avant la seconde phase de fonctionnement, et dans lequel le réseau neuronal est d'abord entraîné au moyen de données d'entraînement obtenues dans la première phase de fonctionnement.

3. Procédé selon la revendication 2, dans lequel le réseau neuronal est ensuite entraîné au moyen de données d'entraînement obtenues dans la seconde phase de fonctionnement, et/ou dans lequel les données d'entraînement comprennent respectivement des paramètres de fonctionnement associés à des valeurs de réglage déterminées.

4. Procédé selon l'une des revendications précédentes, dans lequel des paramètres de consommation sont pris en compte au moyen de la fonction de coût et sont considérés avec des objectifs respectifs.

5. Procédé selon l'une des revendications précédentes, dans lequel une ou plusieurs valeurs réelles du ou des paramètres de fonctionnement sont détectées pour un ou plusieurs moments passés, dans lequel une ou plusieurs valeurs de prévision pour le ou les paramètres de fonctionnement sont établies pour un ou plusieurs moments futurs à l'aide de la ou des valeurs réelles à l'aide du processus de régulation à optimisation automatique, et dans lequel la ou les valeurs de réglage sont prédéfinies à l'aide d'une ou de plusieurs valeurs de consigne pour le ou les paramètres de fonctionnement et à l'aide de la ou des valeurs de prévision à l'aide du processus de régulation à optimisation automatique.

6. Procédé selon l'une des revendications précédentes, dans lequel de nouvelles stratégies de régulation sont explorées au moyen du réseau neuronal dans des boucles d'exploration répétées.

7. Procédé selon l'une des revendications précédentes, dans lequel le caractère approprié de la ou des valeurs de réglage est examiné avant leur utilisation pour le réglage du ou des organes de réglage.

8. Procédé selon l'une des revendications précédentes, dans lequel la ou les valeurs de prévision pour le ou les paramètres de fonctionnement pour le ou les moments futurs sont comparées à des valeurs réelles obtenues ultérieurement auxdits moments, dans lequel une qualité de prévision est établie sur la base de la comparaison.

9. Procédé selon la revendication 8, dans lequel une adaptation du processus de régulation à optimisation automatique est effectuée ou le processus de régulation à optimisation automatique est remplacé par un autre processus de régulation lorsque la qualité de prévision établie n'atteint pas une qualité minimale prédéfinie.

10. Procédé selon l'une des revendications précédentes, dans lequel fonctionne une installation d'ingénierie des procédés (100) dans laquelle est effectuée une séparation à basse température de mélanges de composants, dans lequel fonctionne en particulier une installation de séparation d'air en tant qu'installation d'ingénierie des procédés (100).

11. Installation d'ingénierie des procédés (100) configurée pour régler un ou plusieurs organes de réglage dans l'installation d'ingénierie des procédés (100) à l'aide d'une ou de plusieurs valeurs de réglage et pour ainsi influencer un ou plusieurs paramètres de fonctionnement de l'installation d'ingénierie des procédés (100), dans laquelle le ou les organes de réglage sont ou comprennent un ou plusieurs flux massiques et/ou soupapes, la ou les valeurs de réglage sont ou comprennent des valeurs de réglage du ou des flux massiques et/ou soupapes, et le ou les paramètres de fonctionnement sont ou comprennent un ou plusieurs flux massiques et/ou concentrations de substances et/ou températures, **caractérisé en ce qu'**un dispositif de régulation (50) est mis à disposition, lequel est configuré pour effectuer le réglage de la ou des valeurs de réglage au moins dans une phase de procédé à l'aide d'un processus de régulation à optimisation automatique et pour exécuter le processus de régulation à optimisation automatique à l'aide d'un apprentissage par renforcement profond basé sur un modèle et en prenant en compte une fonction de coût, dans laquelle un ou plusieurs composants de l'installation d'ingénierie de procédés (100) sont représentés dans un modèle au moyen d'un réseau neuronal, dans laquelle le réseau neuronal représente un comportement de l'installation d'ingénierie de procédés (100) et est utilisé dans l'apprentissage par renforcement profond basé sur un modèle, dans laquelle l'installation d'ingénierie des procédés est configurée pour prédire un comportement futur de l'installation d'ingénierie des procédés sur un horizon temporel prédéfini au moyen du réseau neuronal dans le cadre d'une régulation du ou des paramètres de fonctionnement de l'installation d'ingénierie des procédés (100).

12. Installation (100) selon la revendication 11, laquelle est réalisée de telle sorte qu'une séparation à basse température de mélanges de composants y est effectuée, et laquelle est en particulier réalisée sous forme d'installation de séparation d'air.

13. Procédé pour la modification d'une installation d'ingénierie des procédés (100), laquelle est configurée pour régler un ou plusieurs organes de réglage dans l'installation d'ingénierie des procédés (100) à l'aide d'une ou de plusieurs valeurs de réglage et pour ainsi influencer un ou plusieurs paramètres de fonctionnement de l'installation (100), dans lequel le ou les organes de réglage sont ou comprennent un ou plusieurs flux massiques et/ou soupapes, la ou les valeurs de réglage sont ou comprennent des valeurs de réglage du ou des flux massiques et/ou soupapes, et le ou les paramètres de fonctionnement sont ou comprennent un ou plusieurs flux massiques et/ou concentrations de substances et/ou températures, **caractérisé en ce que,** lors de la modification de l'installation, un processus de régulation existant, au moyen duquel la ou les valeurs de réglage sont réglées, est remplacé par un processus de régulation à optimisation automatique, dans lequel le processus de régulation à optimisation automatique comprend l'utilisation d'un apprentissage par renforcement profond basé sur un modèle et la prise en compte d'une fonction de coût, et dans lequel un ou plusieurs composants de l'installation d'ingénierie des procédés (100) sont représentés dans un modèle au moyen d'un réseau neuronal, dans lequel le réseau neuronal représente un comportement de l'installation d'ingénierie des procédés (100) et est utilisé dans l'apprentissage par renforcement profond basé sur un modèle, **et en ce que** le remplacement du processus de régulation existant par le processus de régulation à optimisation automatique comprend le transfert successif de fonctions de régulation du processus de régulation existant vers le processus de régulation à optimisation automatique, dans lequel l'installation d'ingénierie des procédés est configurée pour prédire un comportement futur de l'installation d'ingénierie des procédés sur un horizon temporel prédéfini au moyen du réseau neuronal dans le cadre d'une régulation du ou des paramètres de fonctionnement de l'installation d'ingénierie des procédés (100).
